# EUROPEAN PATENT APPLICATION

(11) **EP 1 569 438 A2**
(43) Date of publication of application: **31.08.2005**
(21) Application number: 05001716.9
(22) Date of filing: 27.01.2005
(51) Int. Cl.: H04N 1/60

(54) **Color conversion system,color conversion apparatus and color conversion program storage medium**

(30) Priority: 26.02.2004 JP 2004051791
(71) Applicant: Fuji Photo Film Co. Ltd., Kanagawa 250-0193 (JP)
(72) Inventor: Kawakami, Shigeki c/o FUJI FILM CO.,LTD., Kanagawa 258-8538 (JP); Ikeda, Kyoko c/o FUJI FILM CO.,LTD., Kanagawa 258-8538 (JP); Kinoshita, Yoshiaki c/o FUJI FILM CO.,LTD., Kanagawa 258-8538 (JP); Tamagawa, Kiyomi c/o FUJI FILM CO.,LTD., Kanagawa 258-8538 (JP)
(74) Representative: Klunker . Schmitt-Nilson . Hirsch

(57) **Abstract**

This invention provides a color conversion system, a color conversion apparatus and color conversion program storage medium which include a correction defining section that defines a range correction to correct a brightness range of a color according to an operation and a range correcting section that performs a range correction defined by the correction defining section to multiple conversion subjects to which the color conversion is performed, or include a gain defining section that defines a gain adjustment in at least one of a first device color space and a second device color space according to an operation apart from a first color conversion definition and a second color conversion definition and a gain adjustment section that performs the gain adjustment defined by the gain defining section to the multiple conversion subjects to which the color conversion is performed.

## Description

### BACKGROUND OF THE INVENTION

### Field of the Invention

The present invention relates to a color conversion system and a color conversion apparatus which perform color conversion, and a color conversion program storage medium built into a computer system storing a color conversion program which causes the computer system to perform the color conversion.

### Description of the Related Art

In a field of printing for instance, there is a conventionally known input_edit_output system that captures a manuscript with an input device such as a scanner or a digital still camera, creates image data representing images and page data describing pages of printed matter in which the images, characters and figures are placed, and outputs the printed matter with an output device such as a printer or a printing system based on the image data and page data. In general, such an input_edit_output system has a color conversion apparatus and a color conversion program built therein for the sake of performing color conversion to the image data and page data so as to render colors of the images and characters proper on the printed matter.

The color conversion in the color conversion apparatus and color conversion program uses a color conversion definition (input profile) that defines the color conversion between a device color space (an RGB color space or a CMYK color space for instance) dependent on the input device used to capture a manuscript image and a common color space (a Lab color space or an LCH color space for instance) independent of the device, and a color conversion definition (output profile) that defines the color conversion between a device color space dependent on the output device used to output the printed matter and the common color space. These color conversion definitions define the color conversions dependent on color reproduction characteristics of the input device and output device, and are prepared for each model of the input device and output device or each apparatus of the same model of the device. Furthermore, even in the case of the same device models, there are the cases where the color conversion definitions are prepared for each of input and output conditions in consideration of differences in paper and ink.

And the color conversion is performed by creating the color conversion definition having these color conversion definitions connected therein and defining the color conversion between mutual device spaces (device link profile) (refer to Japanese Patent Laid-Open No. 2002-139381 for instance).

When connecting the color conversion definitions, there is a possibility that inconvenience may arise due to a difference in a range of colors representable by the devices if simply connected via the common color space. Therefore, there are many cases where a modification for the sake of absorbing such a difference is performed based on the color conversion definitions to be connected (refer to Japanese Patent Laid-Open No. 4-196675 for instance).

There is also a known technique for performing color modification to the individual image data and page data to be color-converted for the sake of color adjustment (refer to Japanese Patent Laid-Open No. 9-83824 for instance).

### SUMMARY OF THE INVENTION

The present invention has been made in view of the above circumstances and provides a color conversion system, a color conversion apparatus and a color conversion program storage medium.

A modification of a color conversion definition itself is generally the modification uniquely determined according to a purpose of the modification. In the case of the modification of which subjects are individual data, it is generally the modification by a manual operation reflecting an editor's idea.

There is also a demand, however, for performing color modification to pages constituting a copy of printed matter to give it a common color tone meeting the editor' s idea for instance.

If thought is given to applying the conventional modification of which subjects are the individual data in order to meet such a demand, there is a problem that the manual operation for the individual data is cumbersome.

If a color conversion definition corresponding to an input device or an output device is modified according to preference of an individual, it no longer reflects color reproduction capability of the device. Therefore, there arises a problem that it becomes difficult to use the color conversion definition for its originally intended purpose.

Such a problem is not the problem limited to the input_edit_output system, but it is the problem that generally arises to the color conversion apparatus and a color conversion program for performing color conversion based on a profile.

In view of the above circumstances, the present invention provides the color conversion system and color conversion apparatus capable of performing the color conversion meeting its original purpose and easily performing the color modification according to preference and the color conversion program storage medium storing a color conversion program for causing a computer system to execute such color conversion and so on.

A first color conversion system according to the present invention is the one wherein:
the system performs color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
includes:
   a correction defining section that defines a range correction to correct a brightness range of a color according to an operation; and
   a range correcting section that performs the range correction defined by the correction defining section to multiple conversion subjects to which the color conversion is performed.

As for the first color conversion system of the present invention, the range correction performed to the multiple conversion subjects is defined by the correction defining section according to the operation. And the defined range correction is performed to the subjects to which originally intended color conversion based on the first color conversion definition and second color conversion definition is performed. Therefore, according to the first color conversion system of the present invention, it is possible to perform the originally intended color conversion and also define the range correction according to preference of the individual for the multiple conversion subjects so as to easily perform it.

The first color conversion system according to the present invention is the one wherein:
the correction defining section may define target values of highlighting and/or shadowing in the range correction according to the operation; or
the correction defining section may define corrected intensity in the range correction according to the operation.

A second color conversion system for attaining the purpose according to the present invention is the one
wherein:
the system performs color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
includes:
   a gain defining section that defines a gain adjustment in at least one of the first device color space and the second device color space according to an operation apart from the first color conversion definition and the second color conversion definition; and
   a gain adjustment section that performs the gain adjustment defined by the gain defining section to the multiple conversion subjects to which the color conversion is performed.

As for the second color conversion system of the present invention, the gain adjustment performed to the multiple conversion subjects is defined by the gain defining section according to the operation. And the defined gain adjustment is performed to the subjects to which the originally intended color conversion based on the first color conversion definition and second color conversion definition is performed. Therefore, according to the second color conversion system of the present invention, it is possible to perform the originally intended color conversion and also define the gain adjustment according to preference of the individual for the multiple conversion subjects so as to easily perform it.

A first color conversion apparatus for attaining the purpose according to the present invention is the one
wherein:
the apparatus performs color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
includes:
   a correction definition obtaining section that obtains a correction definition defining a range correction to correct a brightness range of a color; and
   a range correcting section that performs the range correction defined by the correction definition obtained by the correction definition obtaining section to multiple conversion subjects to which the color conversion is performed.

As for the first color conversion apparatus of the present invention, the correction definition defining the range correction performed to the multiple conversion subjects is obtained. And the range correction is performed to the subjects to which the originally intended color conversion is performed. Therefore, a user of the color conversion apparatus can define the range correction in the form of the correction definition and thereby have the originally intended color conversion performed and also have the range correction according to preference of the individual performed to the multiple conversion subjects.

The first color conversion apparatus according to the present invention is the one suitable in a form wherein:
"the correction definition is associated with a color conversion definition specification that specifies multiple color conversion definitions as the first color conversion definition and the second color conversion definition; and
the range correcting section performs the range correction defined by the correction definition to the conversion subjects to which the color conversion based on the color conversion definition specified by the color conversion definition specification associated with the correction definition is performed."

As for the first color conversion apparatus in such a suitable form, the range correction defined by the correction definition is performed along with the color conversion based on the color conversion definition specified by the color conversion definition specification. Therefore, it is possible to perform the range correction by associating it with some color conversion type of which range correction -is desired by the color conversion apparatus.

A second color conversion apparatus for attaining the purpose according to the present invention is the one
wherein:
the apparatus performs color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
includes:
   a gain definition obtaining section that obtains a gain definition defining a gain adjustment in at least one of the first device color space and the second device color space apart from the first color conversion definition and the second color conversion definition; and
   a gain adjustment, section that performs the gain adjustment defined by the gain definition obtained by the gain definition obtaining section to the multiple conversion subjects to which the color conversion is performed.

As for the second color conversion apparatus of the present invention, the gain definition defining the gain adjustment performed to the multiple conversion subjects is obtained. And the gain adjustment is performed to the subjects to which originally intended color conversion is performed. Therefore, the user of the color conversion apparatus can define the gain adjustment in the form of the gain definition and thereby have the originally intended color conversion performed and also have the gain adjustment according to preference of the individual performed to the multiple conversion subjects.

The second color conversion apparatus according to the present invention is the one suitable in a form wherein:
"the gain definition is associated with a color conversion definition specification that specifies multiple color conversion definitions as the first color conversion definition and the second color conversion definition; and
the gain adjustment section performs the gain adjustment defined by the gain definition to the conversion subjects to which the color conversion based on the color conversion definition specified by the color conversion definition specification associated with the gain definition is performed."

As for the second color conversion apparatus in such a suitable form, the gain adjustment defined by the gain definition is performed along with the color conversion based on the color conversion definition specified by the color conversion definition specification. Therefore, it is possible to perform the range correction by associating it with some color conversion type of which gain adjustment is desired by the color conversion apparatus.

A first color conversion program storage medium built into a computer system for attaining the purpose according to the present invention is the one wherein:
the storage medium stores a color conversion program, which causes the computer system to perform color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
to include on the computer system:
   a correction definition obtaining section that obtains a correction definition defining a range correction to correct a brightness range of a color; and
   a range correcting section that performs the range correction defined by the correction definition obtained by the correction definition obtaining section to the multiple conversion subjects to which the color conversion is performed.

As for the first color conversion program storage medium according to the present invention, components of the first color conversion apparatus of the present invention are easily constituted by the computer system.

A second color conversion program storage medium built into a computer system according to the present invention is the one wherein:
the storage medium stores a color conversion program, which causes the computer system to perform color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
to include on the computer system:
   a gain definition obtaining section that obtains a gain definition defining a gain adjustment in at least one of the first device color space and the second device color space apart from the first color conversion definition and the second color conversion definition; and
   a gain adjustment section that performs the gain adjustment defined by the gain definition obtained by the gain definition obtaining section to the multiple conversion subjects to which the color conversion is performed.

As for the second color conversion program storage medium according to the present invention, the components of the second color conversion apparatus of the present invention are easily constituted by the computer system.

As for the color conversion program according to the present invention, only a basic form thereof is indicated here. This is just for the purpose of avoiding redundancy, and the color conversion program according to the present invention includes not only the basic form but also various forms corresponding to the forms of the color conversion apparatuses.

The computer system for having the color conversion program according to the present invention built therein may either consist of one computer and peripherals or include multiple computers.

Furthermore, as for elements such as the range correcting section constituted on the computer system by the color conversion program according to the present invention, either one element may be constructed with one program component or one element may be constructed with multiple program components, or multiple elements may be constructed with one component. These elements may be constructed either to perform such an action on their own or to instruct other program and program components to perform it.

As described above, it is possible, according to the present invention, to perform the color conversion meeting its original purpose and easily perform the color modification according to preference of the individual.

### BRIEF DESCRIPTION OF THE DRAWINGS

Fig. 1 is an overall block diagram of an input_edit_output system to which an embodiment of the present invention is applied;
Fig. 2 is a hardware configuration diagram of a computer system represented by a color conversion server shown in Fig. 1;
Fig. 3 is a diagram showing a storage medium storing programs for constructing an embodiment of a color conversion system of the present invention on the input_edit_output system;
Fig. 4 is a functional block diagram showing the functions of an embodiment of the color conversion system of the present invention constructed on the input_edit_output system shown in Fig. 1;
Fig. 5 is a diagram showing an editing screen of a job ticket;
Fig. 6 is a diagram showing a detail screen of color setting;
Fig. 7 is a diagram showing a gain curve editing screen; and
Fig. 8 is a diagram showing a setup editing screen.

### DETAILED DESCRIPTION OF THE INVENTION

Hereunder, embodiments of the present invention will be described by referring to the drawings.

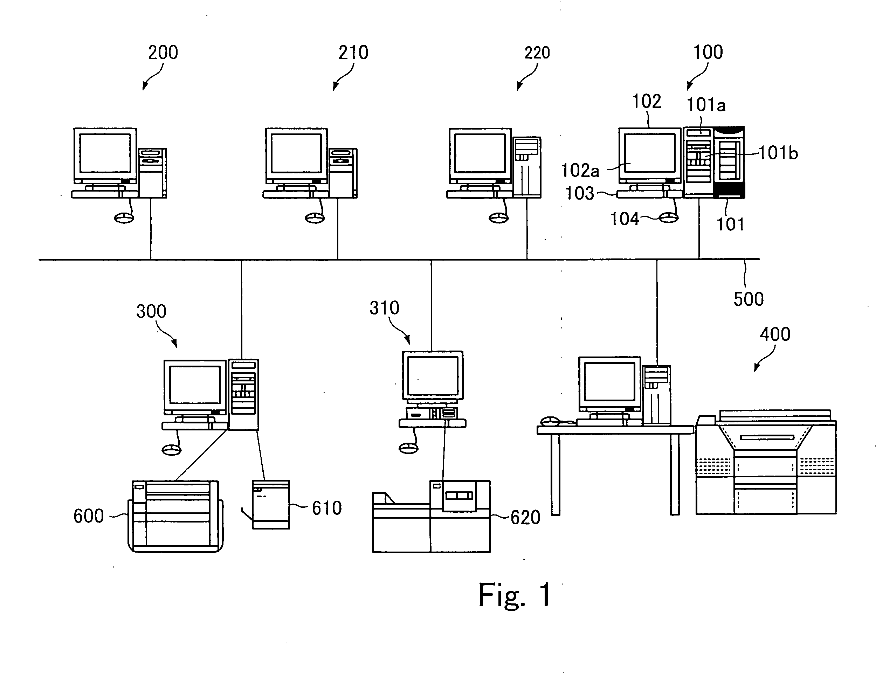

Fig. 1 is an overall block diagram of an input_edit_output system to which an embodiment of the present invention is applied.

Fig. 1 shows one color conversion server 100 for operating as an embodiment of a color conversion apparatus according to the present invention, three client machines 200, 210 and 220, two RIP (Raster Image Processor) servers 300 and 310, one scanner 400 and three printers for image output 600, 610 and 620.

Of the machines shown in Fig. 1, the color conversion server 100, client machines 200, 210 and 220, RIPs 300 and 310 and scanner 400 are mutually connected via a communication line 500 so as to constitute an LAN (Local Area Network) . The printers 600 and 610 are connected to the RIP server 300, and the printer 620 is connected to the RIP server 310.

The scanner 400 reads an image on paper and generates image data representing the image. The generated image data is sent to the client machines 200, 210 and 220 and so on via the communication line 500.

Each of the client machines 200, 210 and 220 consists of a small workstation or personal computer and so on, and the image data generated by reading a manuscript by the scanner 400 and the image data based on an image shot by a digital camera (not shown) are inputted therein. On the client machines 200, 210 and 220, a page having characters, figures and images placed thereon and a single image are electronically edited by an operator, and page data and the image data representing the edited pages and images are generated. The data thus generated is put together as one job per series of data, for instance, constituting a copy of printed matter which is sent in the units of the jobs to the color conversion server 100 via the communication line 500.

The color conversion server 100 consists of a large workstation or personal computer and so on compared with the client machines 200, 210 and 220, and performs a color conversion process to the page data and so on if such data is sent from the client machines 200, 210 and 220. The color conversion process will be described in detail later. The color conversion server 100 performs the color conversion process according to a so-called job ticket, and the client machines 200, 210 and 220 also have a function of editing the job ticket and registering it with the color conversion server 100. The color conversion server 100 performs the color conversion process to each piece of the sent data according to the job ticket.

The page data and the image data are the data in the form which cannot be outputted as-is by an output device such as the printer 600, 610 or 620. For this reason, the data having undergone the color conversion process is sent first to the RIP servers 300 and 310 rather than the output device.

Each of the RIP servers 300 and 310 consists of a small workstation or personal computer and so on. If the page data and so on having undergone the color conversion process are sent from the color conversion server 100, the RIP servers 300 and 310 perform a dot process to them and converts them to bit map data in halftone-dot format which can be outputted by the printers 600, 610 and 620. The converted bit map data is inputted to the printers 600, 610 and 620, where an output image based on the inputted bit map data is created.

Of the machines constituting the input_edit_output system shown in Fig. 1, the embodiment of the present invention is applied to the color conversion server 100 and client machines 200, 210 and 220. As these machines are characterized as the embodiment of the present invention by the processes performed therein, a hardware configuration of these machines will be described here by taking the color conversion server 100 as a representative.

As shown in Fig. 1, the color conversion server 100 has the configuration in its external view including a main unit 101, an image display 102 for displaying the images and characters on a display screen 102a according to instructions from the main unit 101, a keyboard 103 for inputting various kinds of information to the main unit 101 according to a key operation, and a mouse 104 for specifying an arbitrary position on the display screen 102a and thereby inputting the instruction according to an icon displayed at that position for instance. The main unit 101 has an FD loading gate 101a for loading a flexible disk (hereafter, abbreviated as an FD) and a CD-ROM loading gate 101b for loading a CD-ROM in its external view.

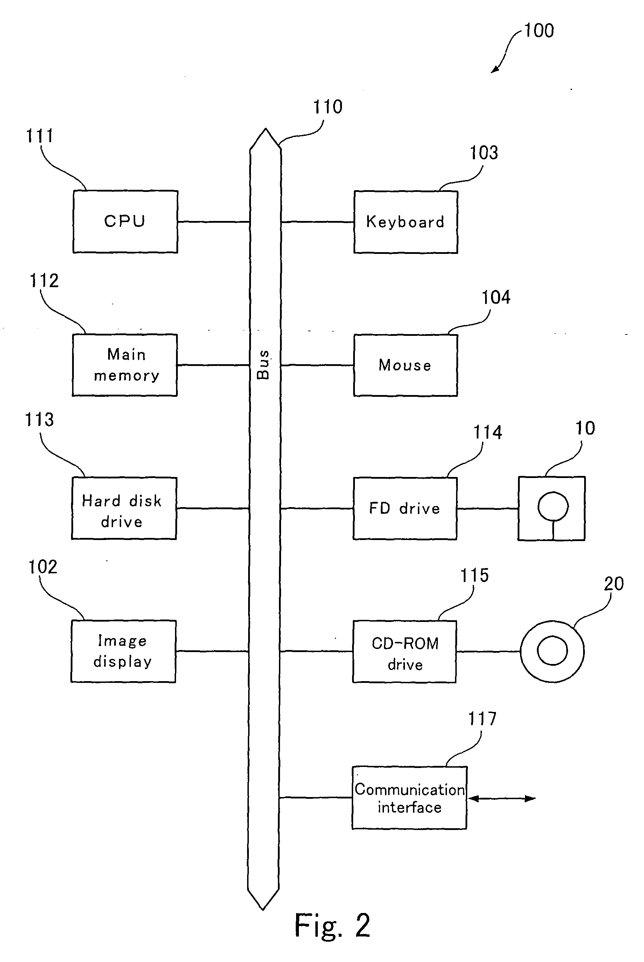

Fig. 2 is a hardware configuration diagram of a computer system represented by the color conversion server shown in Fig. 1.

As shown in Fig. 2, the main unit 101 of the color conversion server 100 shown in Fig. 1 has a CPU 111 for executing various programs, a hard disk drive 113 having various programs and data stored therein, a main memory 112 for having the programs stored in the hard disk drive 113 read thereto and expanded therein to be executed by the CPU 111, an FD drive 114 for accessing an FD 10, a CD-ROM drive 115 having a CD-ROM 20 loaded thereon and accessing the loaded CD-ROM 20, a communication interface 117 connected to the communication line 500 in Fig. 1 for controlling communication with another machine. They are mutually connected via a bus 110 to the image display 102, keyboard 103 and mouse 104 also shown in Fig. 1.

Here, the CD-ROM 20 has each program for constructing an embodiment of the color conversion system of the present invention on the input_ edit_output system shown in Fig. 1 stored therein. The CD-ROM 20 is loaded on the CD-ROM drive 115, and a color conversion program stored in the CD-ROM 20 is uploaded to the color conversion server 100 so as to be stored in the hard disk drive 113. Necessary programs are downloaded to the client machines 200, 210 and 220 via the communication line 500 in Fig. 1. As the programs stored in the machines are started and executed, the input_edit_output system operates as an embodiment of the color conversion system according to the present invention, the color conversion server 100 operates as an embodiment of the color conversion apparatus according to the present invention, and the client machines 200, 210 and 220 operates as job ticket editing apparatuses equivalent to examples of the correction defining section and gain defining section according to the present invention. A method of installing the programs on the client machines 200, 210 and 220 is not limited to the method of downloading them via the communication line 500 exemplified here. For instance, it may also be the method of storing them in the CD-ROM and directly uploading them to the client machines 200, 210 and 220.

A description will be given below as to the programs for constructing an embodiment of the color conversion system of the present invention on the input_edit_output system.

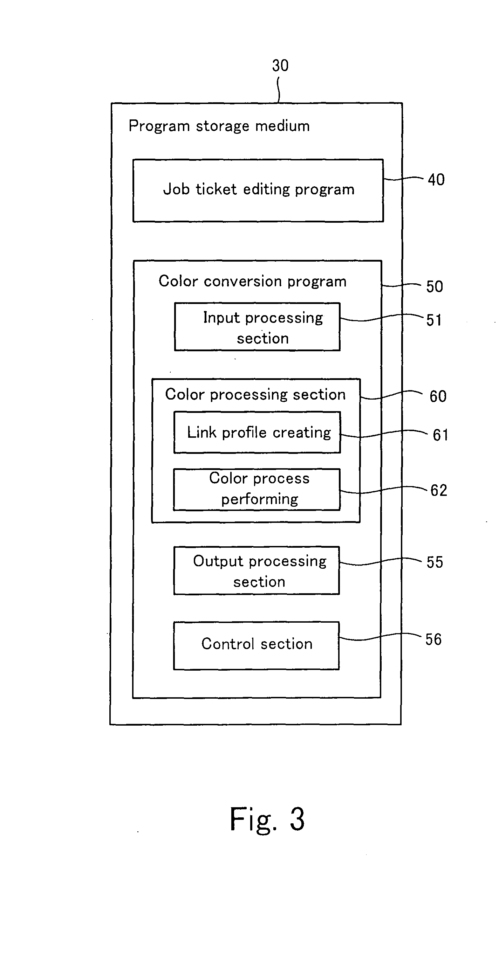

Fig. 3 is a diagram showing a storage medium storing the programs for constructing an embodiment of the color conversion system of the present invention on the input_edit_output system.

A program storage medium 30 shown in Fig. 3 may be any kind of storage medium as long as it has the programs stored therein. For instance, it refers to the CD-ROM in the case where the programs are stored in the CD-ROM, it refers to the hard disk drive in the case where the programs are loaded and stored in the hard disk drive, and it refers to the flexible disk in the case where the programs are downloaded to the flexible disk.

As described above, according to the present invention, the one program storage medium 30 has stored therein a job ticket editing program 40 for operating the client machines as the job ticket editing apparatuses and a color conversion program 50 for operating the color conversion server 100 as an embodiment of the color conversion apparatus of the present invention.

The color conversion program 50 consists of an input processing section 51, a color processing section 60, an output processing section 55 and a control section 56, and the color processing section 60 thereof further consists of a link profile creating section 61 and a color process performing section 62.

Elements of the programs 40 and 50 will be described in detail later.

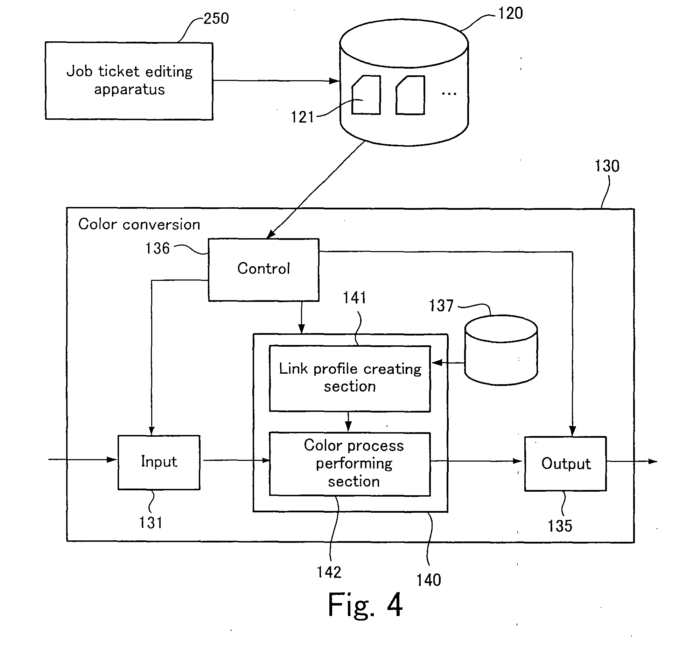

Fig. 4 is a functional block diagram showing the functions of an embodiment of the color conversion system of the present invention constructed on the input_edit_output system shown in Fig. 1.

Fig. 4 shows the color conversion system consisting of a job ticket editing apparatus 250, a job ticket storage device 120 and a color conversion apparatus 130. The job ticket editing apparatus 250 is constituted by installing and executing the job ticket editing program 40 shown in Fig. 3 on the client machines 200, 210 and 220 shown in Fig. 1. The color conversion apparatus 130 is constituted by installing and executing the color conversion program 50 shown in Fig. 3 on the color conversion server 100 shown in Fig. 1. And the job ticket storage device 120 is provided on the hard disk drive 113 shown in Fig. 2.

The color conversion apparatus 130 consists of an input processing section 131, a color processing section 140, an output processing section 135, a control section 136 and a profile storing section 137, and the color processing section 140 thereof further consists of a link profile creating section 141 and a color process performing section 142. Of these components, the input processing section 131, color processing section 140, output processing section 135 and control section 136 are constructed by-the input processing section 51, color processing section 60, output processing section 55 and control section 56 constituting the color conversion program 50 shown in Fig. 3. Thus, the elements of the color conversion program 50 shown in Fig. 3 and the elements of the color conversion apparatus 130 shown in Fig. 4 are mutually corresponding. There is a difference, however, in that the elements in Fig. 4 consist of a combination of hardware of the computer system and an OS and application programs to be executed on the computer system while the elements in Fig. 3 only consist of the application programs.

As described above, the job ticket editing apparatus 250 is equivalent to examples of the correction defining section and gain defining section according to the present invention. Of the elements constituting the color conversion apparatus 130, the control section 136 is equivalent to examples of the correction definition obtaining section and gain definition obtaining section according to the present invention, and the color processing section 140 has the functions equivalent to examples of the range correcting section and gain adjustment section according to the present invention built therein. A job ticket 121 edited by the job ticket editing apparatus 250 and registered with the job ticket storage device 120 includes a correction definition, a gain definition and a color conversion definition specification according to the present invention. And the profile storing section 137 stores an input profile and an output profile equivalent to an example of a color conversion definition according to the present invention.

The elements shown in Fig. 4 will be described hereunder, and the elements of the programs 40 and 50 shown in Fig. 3 will also thereby be described.

First, the elements of the color conversion apparatus 130 will be described. Hereunder, for the sake of convenience of the description, the data inputted to the color conversion apparatus 130 is either the data of an RGB source in which colors are represented in an RGB color space or the data of a CMYK source in which colors are represented in a CMYK color space, and the data outputted from the color conversion apparatus 130 is the data of which colors are represented in the CMYK color space.

The color conversion process in the color conversion apparatus 130 includes three processes of an input process, a color process and an output process if roughly divided. The processes are performed to a job sent to an input folder specified by the job ticket so as to output it to an output folder specified by the job ticket.

The input processing section 131 performs the input process, and sends the data on the job to a subsequent process after the job is inputted to the input folder specified by the job ticket.

The color processing section 140 performs the color process. It connects the input profile and output profile stored in the profile storing section 137 to create a link profile in the link profile creating section 141, and converts the colors as defined by that link profile in the color process performing section 142. The input profile and output profile to be connected are specified in the job ticket. When creating the link profile, the color processing section 140 also performs a range correction for analyzing highlight points and shadow points in the image and correcting a brightness range of the colors so as to render the brightness of the highlight points and shadow points proper. As will be described later, the definition of the range correction is set by the job ticket editing apparatus 250 according to the operation by the operator and is incorporated in the job ticket. Furthermore, when creating the link profile, the color processing section 140 also performs a gain adjustment in an input source color space (the RGB color space or CMYK color space in this case) and an output source color space (the CMYK color space in this case). An adjustment curve defining the gain adjustment is also set by the job ticket editing apparatus 250 according to the operation by the operator and is incorporated in the job ticket.

The output processing section 135 performs the output process, and outputs the data having undergone steps of the color conversion process to the output folder specified by the job ticket.

The control section 136 obtains the job ticket 121 registered with the job ticket storage device 120, and controls the process of each individual element according to the contents of the job ticket 121.

The color conversion process is thus performed in the color conversion apparatus 130. The job ticket editing apparatus 250 has various GUIs prepared to edit the job ticket 121, and the GUIs are operated by the operator to edit the job ticket. Therefore, the operator can set the gain adjustment, range correction and so on freely by editing the job ticket and also send the jobs to the input folder specified by the job ticket so as to easily perform desired color modification to multiple pieces of input data.

Hereunder, a description will be given as to each of the GUIs.

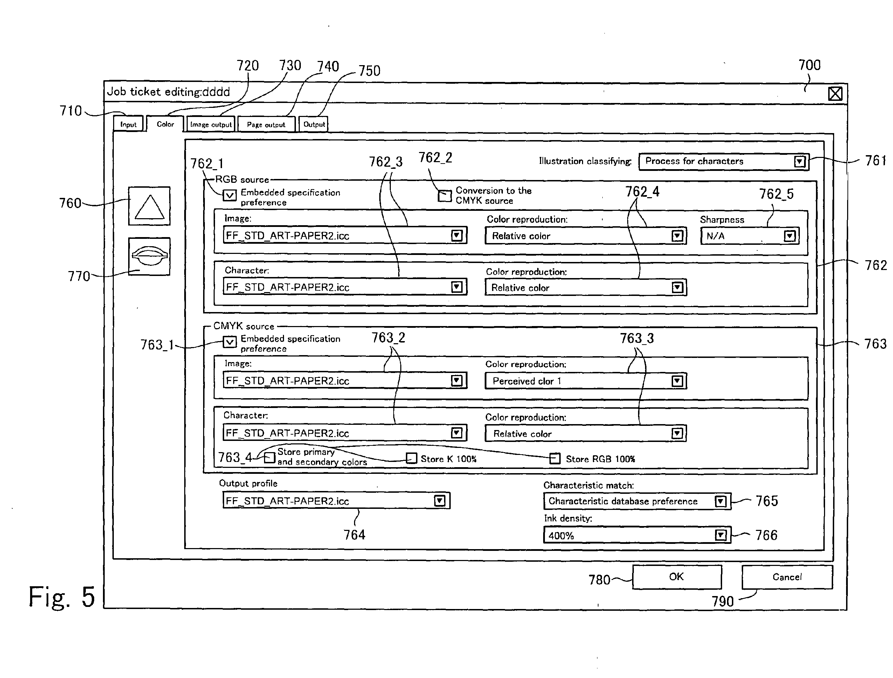

Fig. 5 is a diagram showing an editing screen of the job ticket.

A job ticket editing screen 700 shown here is opened on determining a name of the job ticket to be edited, and consists of five tabs of an input tab 710, a color tab 720, an image output tab 730, a page output tab 740 and an output tab 750. The input tab 710 sets the input folder, the color tab 720 sets various parameters related to the color conversion process as will be described in detail later, and the image output tab 730 sets format conversion and resolution conversion for the image data representing a single image. The page output tab 740 sets a data type and image thinning as to the page data describing a page, and the output tab 750 sets the output folder and a file name template outputted to the output folder.

The color tab 720 has a standard button 760 and a detail button 770 provided thereto, and the screen of the color tab 720 is switched between a standard screen and a detail screen by clicking on these buttons.

The job ticket editing screen 700 has an OK button 780 and a cancel button 790 provided at its lower right. If the OK button 780 is clicked on, the job ticket of the contents set on the job ticket editing screen 700 is registered with the job ticket storage device 120 in Fig. 4. If the cancel button 790 is clicked on, the entire contents set on the job ticket editing screen 700 are canceled.

Fig. 5 shows the standard screen of the color tab 720, where color conversion mode setting, selection of the profile, characteristic process setting and so on are performed.

In the upper right-hand corner of the standard screen, there is an illustration classifying and selecting column 761 provided for the sake of selecting whether a color processing method of vector data components such as figures and illustrations in the page data should be the same process as the color conversion process for image components or the same process as the color conversion process for character components. In the center of the standard screen, there are an RGB setting section 762 for performing various settings for the input data of an RGB source and a CMYK setting section 763 for performing various settings for the input data of a CMYK source provided tandem. In the lower part of the standard screen, there are an output profile selection column 764 for selecting the output profile, a characteristic match setting column 765 for selectively setting the method of reproducing the characteristics in process colors as a database preference method of using a decomposition value registered with a characteristic database or a job specification preference method of using an alternative color value specified in the input job as-is, and an ink amount setting column 766 for selectively setting a maximum ink amount in a shadow part from 240 %, 280 %, 320 %, 360 % and 400 % (no limit to the amount).

The RGB setting section 762 has a check box 762_1 for selecting "embedded specification preference" to maintain the color space specified in the input data, a check box 762_2 for selecting "conversion to the CMYK source" to convert the RGB source to the CMYK source once and then perform the color conversion, an input profile selection column 762_3 for selecting the input profiles used for the color process for the image components and character components respectively, a color reproduction selection column 762_4 for selecting a color reproduction mode for the image components and character components respectively, and a sharpness setting column 762_5 for setting a degree of improving sharpness of an RGB image.

The CMYK setting section 763 has a check box 763_1 for selecting "embedded specification preference", an input profile selection column 763_2 for selecting the input profiles used for the color process for the image components and character components respectively, a color reproduction selection column 763_3 for selecting a color reproduction mode for the image components and character components respectively, and three check boxes 763_4 for selecting various storage modes to reproduce 0%, 100% and so on of the CMYK source also in the output data.

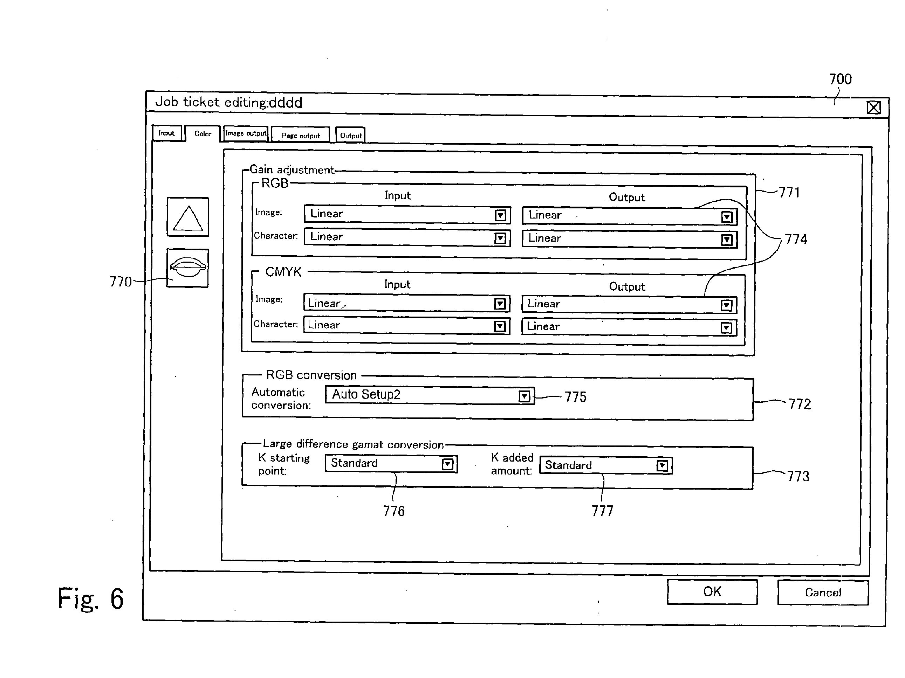

Fig. 6 is a diagram showing the detail screen of color setting.

Fig. 6 shows the detail screen displayed on clicking on a detail button 770. The detail screen has a gain adjustment section 771 for selectively setting the adjustment curve (gain curve) for the gain adjustment provided therein. The adjustment curve is equivalent to an example of the gain definition according to the present invention. The detail screen also has an RGB conversion setting section 772 for setting an auto setup for the RGB source and a large difference gamut conversion setting section 773 for setting an added amount of K-version ink in the case where there is a large difference between a color reproduction area (gamut) of the input device and that of the output device provided therein.

The gain adjustment setting section 771 has eight gain curve setting columns 774 for selectively setting each of the gain curves of 2³ = 8 kinds according to whether for the RGB source, CMYK source, input data, output data, image components or character components prepared therein. The RGB conversion setting section 772 has a setup profile setting column 775 for selectively setting a setup profile including an example of the correction definition defining the contents of the auto setup according to the present invention prepared therein.

The large difference gamut conversion setting section 773 has a K starting point specification column 776 for specifying a starting point to start adding the K-version ink and an added K amount setting section 777 for setting the added amount of the K-version ink.

Next, a description will be given as to the GUIs for creating the gain curve selected by the gain adjustment setting section 771 and the setup profile selected by the setup profile setting column 775 respectively.

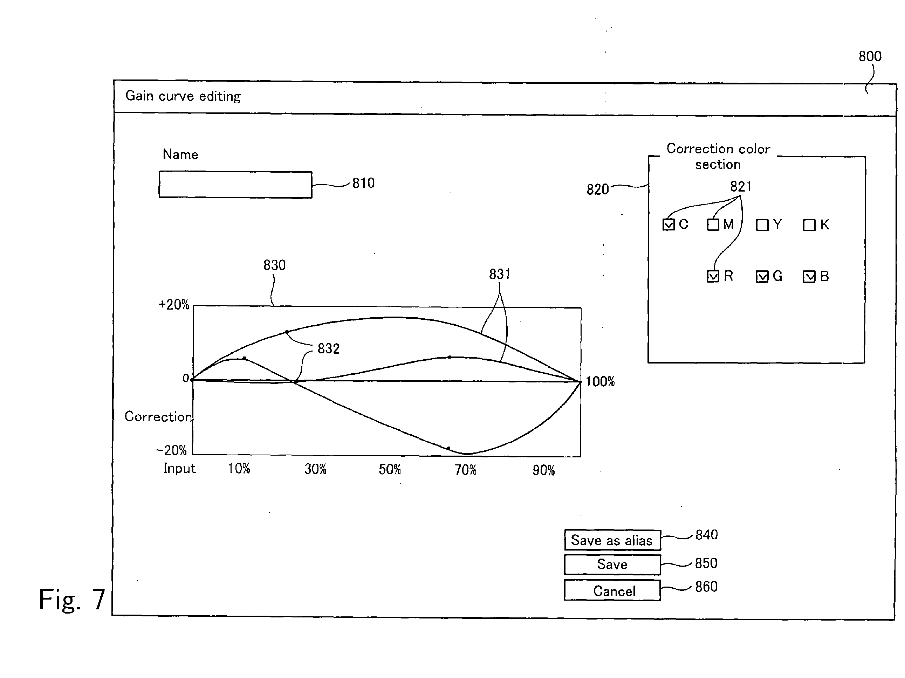

Fig. 7 is a diagram showing a gain curve editing screen.

A gain curve editing screen 800 shown in Fig. 7 has a name display column 810 for showing the name of the gain curve and a correction color selecting section 820 for selecting a subject color for creating the gain curve out of seven colors of CMYKRGB. The correction color selecting section 820 has seven check boxes 821 for selecting each of the seven colors of CMYKRGB prepared therein. It is possible to edit the gain curve with a curve editing column 830 as to the colors corresponding to the check boxes of the check boxes 821 which are checked on.

A horizontal axis of the curve editing column 830 represents a value of a subject source of the gain adjustment as 0% to 100%, and a vertical axis represents an adjusted value for each source value. The curve editing column 830 indicates editable gain curves 831. The gain curves 831 are edited by dragging and dropping adjustment points 832 on the gain curve 831. The mutually adjusted value of the adjustment points 832 is automatically calculated by curve interpolation. It is possible to increase the adjustment points 832 by right-clicking on the gain curves 831.

If an alias saving button 840 is clicked on after the gain curve is edited by the curve editing column 830, a new name of the gain curve is requested, and the gain curve is saved with the new name. If a saving button 850 is clicked on, the gain curve is saved with its original name. If a cancel button 860 is clicked on, unsaved editing contents are canceled.

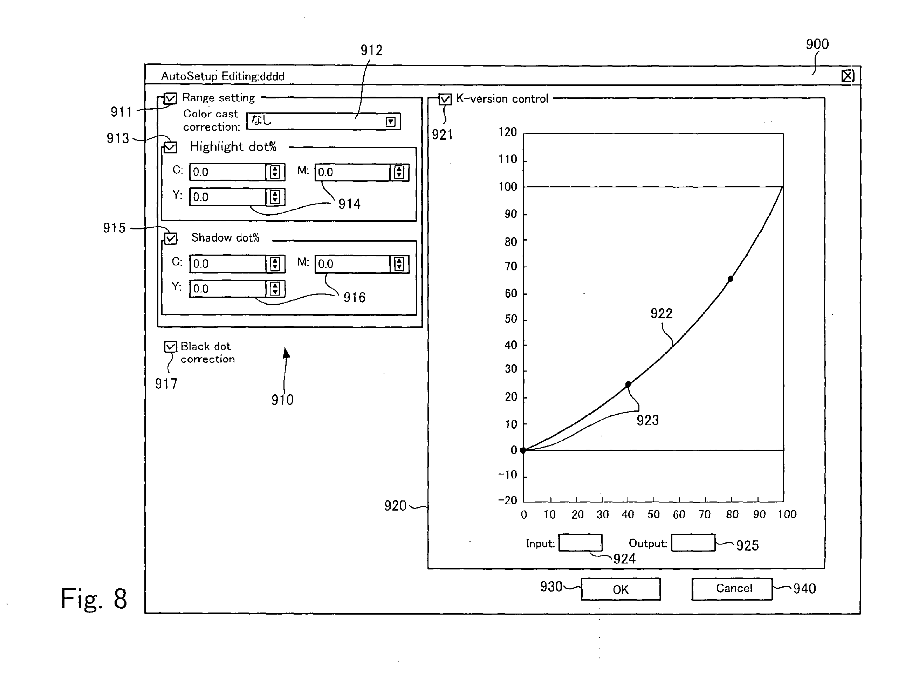

Fig. 8 is a diagram showing a setup editing screen.

This setup editing screen 900 has a range setting section 910 for setting the range correction to correct the brightness range of the image and a K-version control section 920 for setting a control curve of a K version provided therein. The setting sections are activated by clicking on check boxes 911 and 921 thereof.

The range setting section 910 has a color cast correction setting column 912 for selectively setting a degree of color cast correction for bringing a hue on the highlight side close to neutral gray, a highlight check box 913 for activating a change of a target value for the highlight point obtained by analysis of the image, three highlight adjustment columns 914 for setting a change amount to change the target value for the highlight point against a default, a shadow check box 915 for activating a change of a target value for the shadow point obtained by the analysis of the image, three shadow adjustment columns 916 for setting a change amount to change the target value for the shadow point against a default, and a black dot check box 917 for selecting black dot correction to color-convert the darkest dot on an input source side to the darkest dot in the CMYK color space on an output side.

The K-version control section 920 shows a K-version control curve 922 in the form of a K-version value against a C-version value, and the control curve 922 is changed by dragging and dropping an adjustment points 923 thereon. The control curve 922 is automatically calculated by curve interpolation between the adjustment points 923. An input value (C-version value) and an output value (K-version value) at the adjustment point 923 are displayed in an input value display column 924 and an output value display column 925.

The setup editing screen 900 has an OK button 930 and a cancel button 940 provided in the lower right corner. If the OK button 930 is clicked on, the definition of the setup edited on the setup editing screen 900 is saved. If the cancel button 940 is clicked on, editing is finished without saving the definition of the setup.

According to this embodiment, it is possible to set the job ticket freely by using the various GUIs, and the set job ticket is used so as to easily perform the desired color modification to the multiple pieces of input data.

The description indicates the input profile and output profile as examples of the first color conversion definition and second color conversion definition according to the present invention. However, both the first color conversion definition and second color conversion definition according to the present invention may be the input profiles or the output profiles.

The description indicates the instances in which examples of the correction definition and gain definition according to the present invention are included in the job ticket. However, the correction definition and gain definition according to the present invention may also be prepared separately from the job ticket.

The description also indicates the example in which the range correction and gain adjustment are performed when creating the link profile. However, the range correction and gain adjustment according to the present invention may also be performed separately from creation of the link profile.

## Claims

1. A color conversion system wherein:
the system performs color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
comprises:
a correction defining section that defines a range correction to correct a brightness range of a color according to an operation; and
a range correcting section that performs the range correction defined by the correction defining section to a plurality of conversion subjects to which the color conversion is performed.

2. The color conversion system according to claim 1,
wherein the correction defining section defines target values of highlighting and/or shadowing in the range correction according to the operation.

3. The color conversion system according to claim 1,
wherein the correction defining section defines corrected intensity in the range correction according to the operation.

4. A color conversion system wherein:
the system performs color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
comprises:
a gain defining section that defines a gain adjustment in at least one of the first device color space and the second device color space according to an operation apart from the first color conversion definition and the second color conversion definition; and
a gain adjustment section that performs the gain adjustment defined by the gain defining section to the plurality of conversion subjects to which the color conversion is performed.

5. A color conversion apparatus wherein:
the apparatus performs color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
comprises:
a correction definition obtaining section that obtains a correction definition defining a range correction to correct a brightness range of a color; and
a range correcting section that performs the range correction defined by the correction definition obtained by the correction definition obtaining section to a plurality of conversion subjects to which the color conversion is performed.

6. The color conversion apparatus according to claim 5,
wherein:
the correction definition is associated with a color conversion definition specification that specifies a plurality of color conversion definitions as the first color conversion definition and the second color conversion definition; and
the range correcting section performs the range correction defined by the correction definition to the conversion subjects to which the color conversion based on the color conversion definition specified by the color conversion definition specification associated with the correction definition is performed.

7. A color conversion apparatus wherein:
the apparatus performs color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
comprises:
a gain definition obtaining section that obtains a gain definition defining a gain adjustment in at least one of the first device color space and the second device color space apart from the first color conversion definition and the second color conversion definition; and
a gain adjustment section that performs the gain adjustment defined by the gain definition obtained by the gain definition obtaining section to the plurality of conversion subjects to which the color conversion is performed.

8. The color conversion apparatus according to claim 7,
wherein:
the gain definition is associated with a color conversion definition specification that specifies a plurality of color conversion definitions as the first color conversion definition and the second color conversion definition; and
the gain adjustment section performs the gain adjustment defined by the gain definition to the conversion subjects to which the color conversion based on the color conversion definition specified by the color conversion definition specification associated with the gain definition is performed.

9. A color conversion program storage medium built into a computer system, wherein:
the storage medium stores a color conversion program, which causes the computer system to perform color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
to comprise on the computer system:
a correction definition obtaining section that obtains a correction definition defining a range correction to correct a brightness range of a color; and
a range correcting section that performs the range correction defined by the correction definition obtained by the correction definition obtaining section to the plurality of conversion subjects to which the color conversion is performed.

10. A color conversion program storage medium built into a computer system, wherein:
the storage medium stores a color conversion program, which causes the computer system to perform color conversion between a first device color space and a second device color space based on a first color conversion definition that defines color conversion between the first device color space dependent on a first device and an independent color space independent of the device and a second color conversion definition that defines the color conversion between the second device color space dependent on a second device and the independent color space, and
to comprise on the computer system:
a gain definition obtaining section that obtains a gain definition defining a gain adjustment in at least one of the first device color space and the second device color space apart from the first color conversion definition and the second color conversion definition; and
a gain adjustment section that performs the gain adjustment defined by the gain definition obtained by the gain definition obtaining section to the plurality of conversion subjects to which the color conversion is performed.
